# EUROPEAN PATENT APPLICATION

(11) **EP 2 378 116 A1**
(43) Date of publication of application: **19.10.2011**
(21) Application number: 10003927.0
(22) Date of filing: 14.04.2010
(51) Int. Cl.: F03D 9/00, F03D 9/02

(54) **Windmill-driven radial air compressor for energy storage**

(71) Applicant: Brzosko, Armand, 03-589 Warszawa (PL)
(72) Inventor: Brzosko, Armand, 03-589 Warszawa (PL)

(57) **Abstract**

Reciprocating compressor to compress atmospheric air with radial arrangement of all cylinders , aerodynamically - optimized casing to reduce wind resistance and turbulence, output control regulated pneumatically by integral pneumatic distributor actuated from turbine's rotor axial load, and windmill controls: braking action and yawing done with pneumatic-only devices driven by compressed air from compressor's header.

## Description

### Field of the invention:

The device is a new type of reciprocating compressor, windmill-driven, with pneumatic-only controls; for utilizing of wind energy stored subsequently in compressed-air tanks.

### Background art:

The use of wind turbines for power production constitutes worldwide already significant portion of primary energy utilization, up to several percent of overall energy consumption in selected countries. There are plenty of high-tech, aerodynamically-optimised turbines, with proven record of millions of working hours. Main problem is caused by non-uniform nature of wind as energy-carrier: the windy periods carry usually too much energy, and are separated by relatively long periods of no-wind, or too-low wind. It forces the designers to build oversized machines, which for majority of time work with 10% of the capacity, and in certain periods have to withstand mechanically extreme conditions. Additionally, considering abundant wind farms build in a given geographic area, if the wind is strong - there is big surplus of energy production in the area, and if there is no wind , then usually also over very large area. This can be partly neutralised by flexibility of the electric grid, as well as existing hydro-storage capacities, however if the wind power exceed some 20%-25% portion in the energy balance, such problems will become substantial.

The long- term storage of big amounts of electric energy is still open issue.

Another issue is energy for mobile applications , i.e. cars , trucks and railroads.

Chemical energy stored in liquid fuels as petrol is nearly ideal, concerning density of the energy, pressure-less tanks, clean burning, etc. However, the oil reserves go to the end , and environmental concerns with CO₂ and H₂O as greenhouse gases put a pressure on the billions of drivers. Hydrogen is even cleaner fuel, however , needs much more energy to produce it than it carries, and causes major logistic problems. Electric cars sound very clean indeed as long as they exist in thousands. However, production/deposition of billions of batteries which all base on reversible electrochemistry will certainly have much more serious impact on the environment than current refineries and petrol-fuelled motors (metal compounds, heavy inorganic compounds, etc).

The proposed device targets all above mentioned aspects as part of truly zero-emission , no-electricity, distributed energy concept for stationary-and , mostly, mobile- energy needs with chances for growth.

### State of the art:

Source 1); "A field guide to American Windmills" T.Lindsay Baker, University of Oklahoma Press 1985 , pages 19 &148 informs about the low-tech approach to use of a windmill for air compression. US- makers Automatic (1870)and Bowjon (1978) successfully mounted standard low-pressure piston-compressors of 1 and 2 cylinders on the axis of rotating turbine, and used compressed air for water pumping.
Source 2) "Power from Wind: A History of Windmill Technology" by Richard Leslie ; Hills, 1996 gives overview of windmills for mechanical applications as drive of various machinery, without mentioning directly-driven radial air compressors.
Source 3); "A practical guide to compressor technology" by Heinz P.Bloch, Wiley Interscience 2006; pages 29-120; considers all existing types of reciprocating compressors, without however any reference to multi-piston, radial-design compressor , as only the specifics of slow windmill-drive and aerodynamically-optimized tower-location dictates such design.
Source: 4); "Wind Energy Explained" by James F.Manwell&Jon G.McGowan; Wiley&Sons 2002; give overview on current state of art in technology used in wind electric turbines-generators. In short , these are: aerodynamically optimized, horizontal-axis wind turbines with speed ranging from 10 - 200 rpm driving the electric generator, which as an electric machine preferably requires high speed (e.g. synchronous speed of 3000 rpm for 50Hz). This discrepancy causes loss of efficiency in making both speeds corresponding , be it via a gearbox or via electric windings. Both turbine and generator /gearbox are rated/oversized for wind speeds 15-20 m/s while for some 90% of time they work with approx. 10% of the nominal capacity due to wind speed distribution. All controls of movements (braking, yaw, pitch) are mechanical, electro-mechanical or hydraulic. Electricity is generally difficult and costly to store. As the speed of wind, a decisive power-factor, changes dramatically with elevation ( approx 1 m/s between 0 m and 30 m -tower, translating to several percent energy production more) prevailing model of turbines apply horizontal-axis rotor and generator with or without gearbox located in the nacelle on turbine axis, at tower height. This demands aero dynamical shaping of the nacelle.

### Disclosing of the invention

### Problems to be solved:

Efficient use of wind energy for air compression requires solution of problems with non-uniform energy of wind , both in terms of time distribution (wind/no wind periods - by energy storage ) as well as energy spectrum ( machine's power-curve must follow third magnitude of wind speed); ensure self-regulation and upwind-orientation in self-sufficient manner ( pneumatic energy only).

### New design description:

Said problems are addressed by the design of a high-pressure air compressor directly driven by wind mill. The compressor is of reciprocating type, 4 stage-compression with 12 radially located cylinder groups each with 4 stages. The compressed medium is atmospheric air, which compressed to 300 bars is to be used as energy carrier for storage and further application, in particular with prospects for mobile applications.

Compressor driven directly by wind turbine contains following novelty features, which are subsequently described in one independent claim and 2 dependent claims.
- radial multi-piston design, aerodynamically optimized to reduce wind resistance and turbulence; low speed (10-100 rpm) adjusted to wind turbine speed fits excellently to slow, thermodynamically-ideal , high-efficiency compression;

Previously existing types of multi-piston compressor do apply in-line or "boxer-" or angular cylinder arrangement, also with 2/3- stage piston/plunger , however no known attempts where made to use radial multi-cylinder , aerodynamically-optimized design. Compact, radial design reduces wind resistance and turbulence while enabling good cooling, thus making the application possible.
- windmill controls: braking action and yawing movements of the turbine are done with devices driven by compressed air from 1^{st}-stage compressor header; wind direction is transmitted as pneumatic signal to air motor actuating the yaw.

Previously existing types of controls use electric, mechanical or hydraulic drives. Wind direction is transmitted as electric signal to electromechanical or electro-hydraulic yaw positioner. Eliminating electric power for signals or drives simplifies the device, makes it self-sufficient in energy and resistant to lightning.
- wind-speed-following compressor output control is done by : selective blow-off of cylinder groups to follow turbine power curve at low-speed wind conditions .This task is realised by pneumatic linear distributor which uses as input the mechanical displacement of turbine hub downwind or upwind caused by aerodynamic drag forces, thus proportional to actual turbine power. Output signals are pneumatic ,consecutively activating/deactivating separate blow-off valves on each cylinder group. The system makes possible to fully use the wind energy : at weak wind (approx. 2 m/s) only 1 or 2 groups of cylinders work already providing max. pressure , and with growing wind speed subsequently next cylinder groups are activated by controlled valves. Part-load operation extends functionality of the device with steady efficiency for large range of wind speed, other as electric generators.

No known such control system (with input signal-displacement of turbine hub and output pneumatic signals to valves) were designed, as there was no need for such design.

Other features , which are not claimed as novelty:
- Upper speed control limit: wind turbine passive stall-characteristic at speeds over 100 rpm, pneumatic brake above 150 rpm. By all cylinders working (12 groups x 4 stages) the compressor output grows proportionally with wind speed up to mechanical limits at 25 m/s where the pneumatic brake is activated:
   - Energy storage is done immediately in the underground storage adjacent to the turbine, in the sufficient number of high-pressure, low-cost FRP-cylinders, with capacity adjusted to local needs;
   - Direct mechanical transmission of wind energy to compressed air energy , without electricity as intermediary medium;
   - No need of turbine speed regulation up to mechanical limits, as the compressor power intake follows parallely turbine power with growing wind speed, which enables to use the machine in the conditions where electric generator would have to be stopped;
   - Oil-free reciprocating 4-stage compression with Teflon-coated cylinders/piston and ball-bearings for crank rods, crankshaft are selected for virtually no-service /no pollution operation;
   - No gearbox
   - Targeted application of compressed air for mobile use is meant to offset the influence of thermodynamic efficiency of compression process (transfer of wind energy to compressed air energy inherently involves heat dissipation).

### List of drawings:

Fig. 1. Compressor cross-section and back view "I",
Fig. 2. Kinematics- diagram of relative movements of crank plate and piston rods
Fig. 3 Wind direction sensor and yawing positioner with air motor and mechanical gear box for position-transmitting.
Fig. 4. Linear pneumatic distributor for part-load blow-off valve control, actuated by turbine hub displacement.
Fig. 5 Pneumatic brake
Fig. 6 Cylinder control valves' system
Fig. 7 System general arrangement drawing: compressor, turbine, tower, underground tanks.

### Detailed description:

### Fig. 1

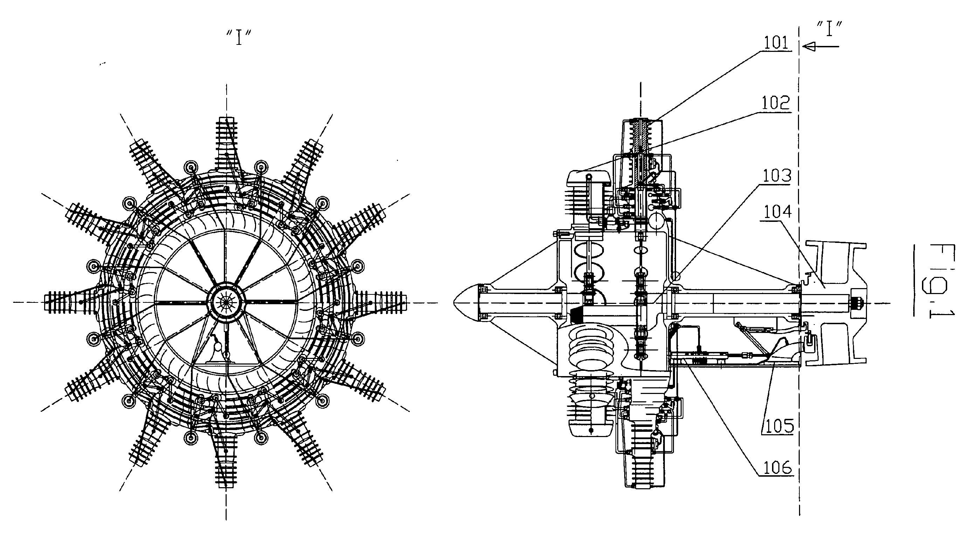

As presented on Fig. 1, the device is a reciprocating compressor with cylinders radially arranged for minimising wind resistance while maintaining good cooling conditions. Number of cylinders and pressure-staging was calculated via iteration/optimisation procedure with input data : rotary speed and end-pressure. End pressure (300 bar abs) was selected based on the availability of standard pneumatic components, FRP-tanks durability and practical judgment. Rotary speed was taken in wind speed function as typical for existing wind turbines.
There are 12 cylinder groups: 1^{st} -stage cylinders (102), 8 bar abs, are single-stage , typical industrial cylinders, whereas 2^{nd}, 3^{rd} and 4^{th}- (101) are stepped-piston cylinders in special execution (although the stepped cylinder itself is well known in compressor technology) for space-saving. Back view "I" shows arrangement of 2^{nd}/3^{rd}/4^{th}-stage cylinders.
The crankshaft (103) is directly coupled to turbine hub (104) .Two crank plates are eccentrically mounted on the crankshaft, using standard ball bearings for oil-free crankcase. First crank plate drives 12 piston rods of 1^{st} - stage cylinders, the second crank plate drives 12 pistons of 2^{nd}/3^{rd}/4^{th} -stages. All piston rods are also ball-bearing-mounted. The crankshaft is made as divided, one-crank-only, making possible mounting of ball-bearings of crank plates.
The compressor casing and 1^{st}-stage cylinders and pistons are made of grey iron, higher-stages cylinder's bushings ,pistons and piston rods of stainless steel. Crank shaft is made of forged carbon steel, however assembled from 2 parts. Cylinders' inner surfaces , piston &piston rings surfaces are PTFE-coated for oil-free operation.
Ball bearings are of typical sizes and makes.
Figure 1 shows also arrangement of pneumatic brake (105) to protect the turbine against over-speed and linear pneumatic distributor (106) for valve group-control.

### Fig. 2

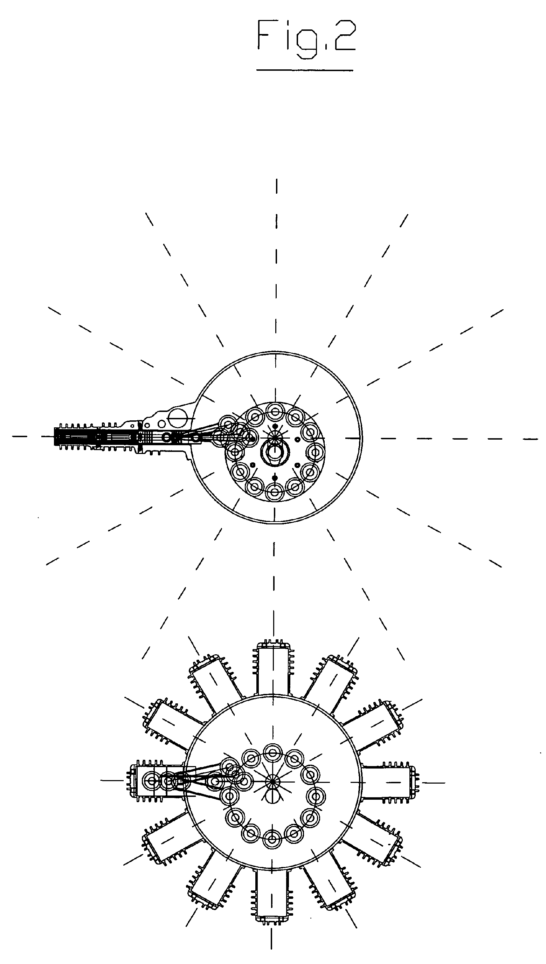

Figure 2 shows kinematics-diagram of relative movement of crank plate - around eccentric bearing , and piston rods, also ball-bearing mounted and actuating reciprocatively the straight-pistons of 1^{st} stage and stepped-pistons of 2^{nd}, 3^{rd} and 4^{th} stage. This kind of solution is otherwise well-known from radial aero-engines.

### Fig. 3

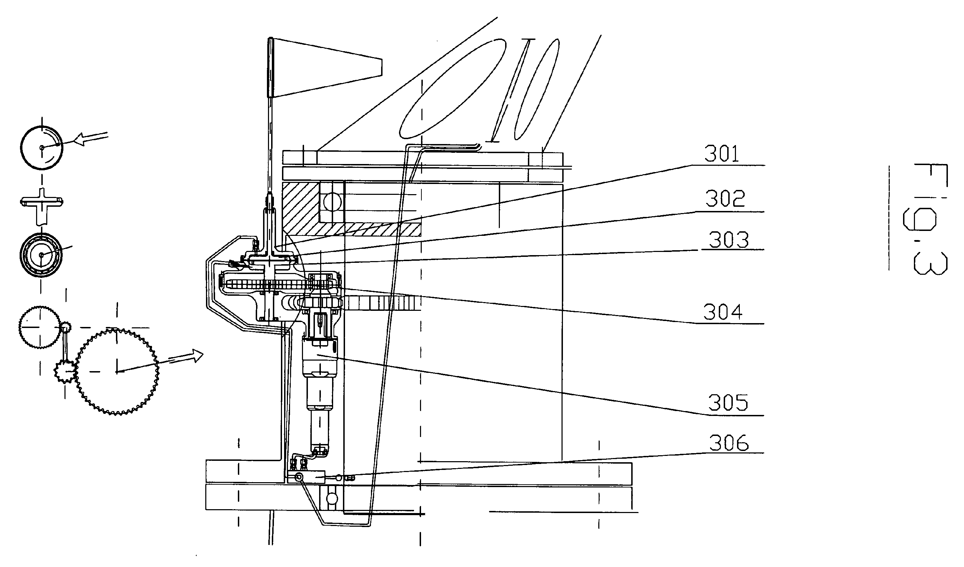

As presented on Fig. 3 , the wind sensor - a small wind-flag - is supported via axial/radial ball bearing in the casing (301) of rotary pneumatic valve. Upper valve - half is attached to 8 bar-header of the compressor. The valve selector (302) turns therefore freely with the wind. If position of the lower valve disc (303) is also downwind, then valve is closed. If wind changes, valve opens and start to provide compressed air 8 bar to standard air motor (305) -low speed /high torque - which revolves the turbine/compressor base until the valve selector meets valve-disc plug again and stops the flow. The lower valve-disc position is co-related accurately with turbine position via 1:1 gearbox (304), which consists of 2 pairs of gears 4:1 +1:4. Low module and big number of teeth ensures angular accuracy in relation to wind, while self-locking gears are considered for positioning-stability.

A standard bi-directional toggle-switch pneumatic valve (306) - however with modified toggle-lever with spring/ratchet for double actuation required before switching the air flow - takes care of reversing of sense-of-rotation of the air motor after every full 360 deg rotation of turbine base , in order to avoid spinning of air hoses down the tower by steadily rotating winds.

The valve casing is made of grey-iron, valve selector- and disc- of carbon steel, as well as gears, with surface treatment. Surfaces of all moving/contacting parts within the pressurized part of the valve are PTFE-coated. The air clearances are kept in tenths-of-millimetre range for minimizing air leakages.

Although pneumatic/electric positioners are otherwise well-known in the industry, but here described kind of device is specifically designed as pneumatic mechanical/pneumatic transmitter, to avoid the need of external electric energy.

### Fig. 4

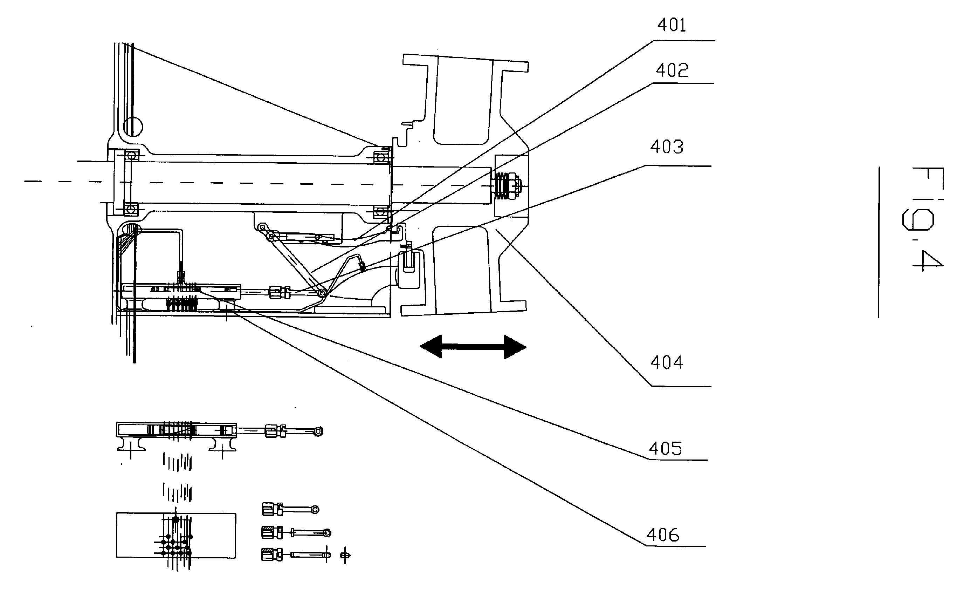

Figure 4 presents the linear pneumatic distributor for pneumatic control of blow-off valves and pneumatic brake. Turbine's rotor hub (404) has possibility of axial movements on the axially-fixed shaft. These movements are counteracted by the designed package of flat springs with calculated resistance/displacement. With growing wind speed total drag force on the rotor, acting along shaft axis, grows proportionally to rotor torque. This way, displacement of the hub follows power curve. This displacement is translated mechanically via lever (401) and multiplied by second lever (402) x8-times to movement of distributor's spindle (403). The linear distributor (406) is a simple double spool (405) valve, supplied with 8-bar air from 1^{st}-stage compressor's header , and with 12 outlets , located along displacement/power curve.
First 11 serve for consecutive pneumatic signals to 11 blow-off valves ( first of 12 compressor's cylinders-group is not controlled , to provide always pressure to headers). The 12^{th} outlet provides pneumatic signal to standard pneumatic brake , when power limit is reached.
Distances between outlets are designed according to power curve against springs-package characteristic. Fine adjustment is done with small-thread nut.

### Fig. 5

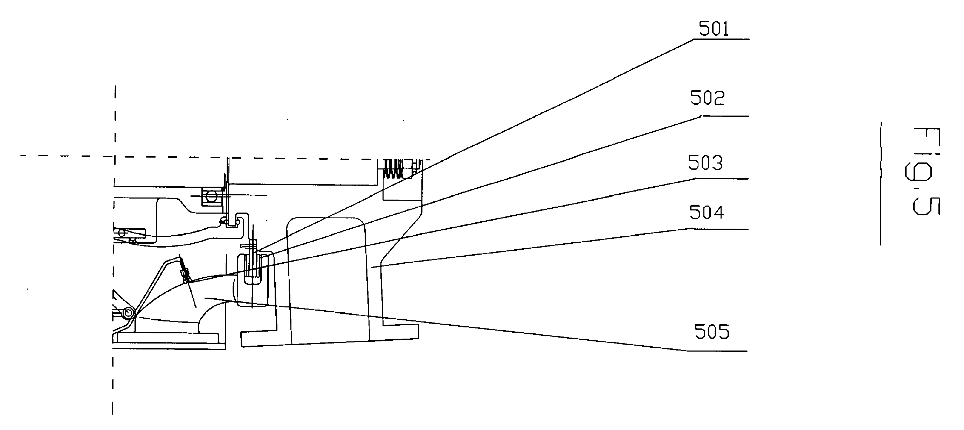

Figure 5 shows standard-design pneumatic brake (505) with replaceable disc (501) and pads (502). The disc has possibility of axial movements to follow hub (504) displacement. Radial movements are limited by loosely-fitted pins, fixed in the hub. The brake is actuated with 8 bar pneumatic signal via connection (503) from linear distributor, when turbine reaches power/speed limit. A bleeder on pneumatic line allows unblocking of the brake after defined time.

### Fig. 6

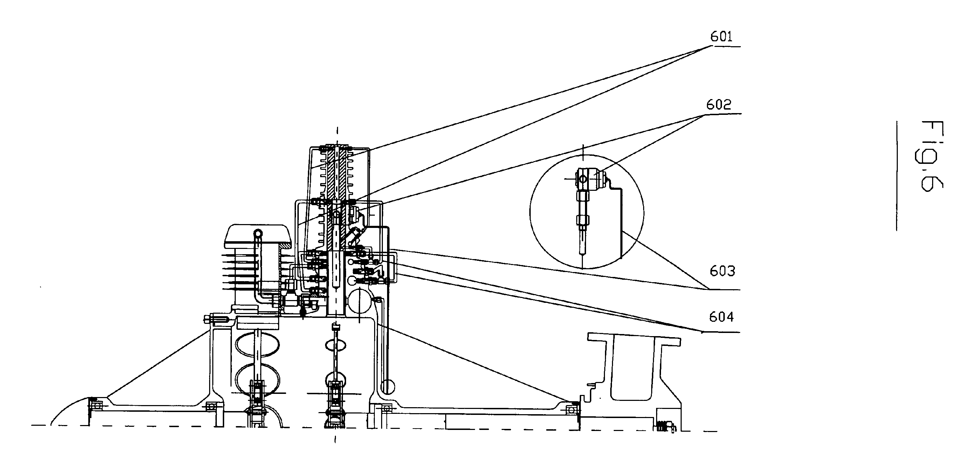

Figure 6 shows details of pneumatic control of 11 from 12 cylinders' groups.
Each group of four pressure-stages cylinders is equipped with one blow-off valve (602), normally open, which is controlled (closed) with pneumatic signal from linear distributor, via control-air lines (603).The blow-off valve opens a collector channel, to which sidelines from discharge sides of all 4 stages of 1 cylinder group are attached via check valves, into atmosphere. Suction lines to each stage (601) take air from respective stage-pressure's circumferential headers, also via check valves. The headers are supplied with air of respective stage-pressure by discharge lines (604), also via check valves. Great deal of design effort was done to standardize and simplify check-valve types, unavoidably rather numerous.
The system works in following manner: by low wind speed all 11 blow-off valves are open into atmosphere, and all except for 1 cylinder groups are idling. Only 1/12 or approx. 8% of rated power is used , enabling the operation at 300 bars even by very weak winds. With growing wind speed subsequent blow-off valves are closed by signal from linear distributor, activating consecutive cylinder groups until all 12 are in operation.

### Fig. 7

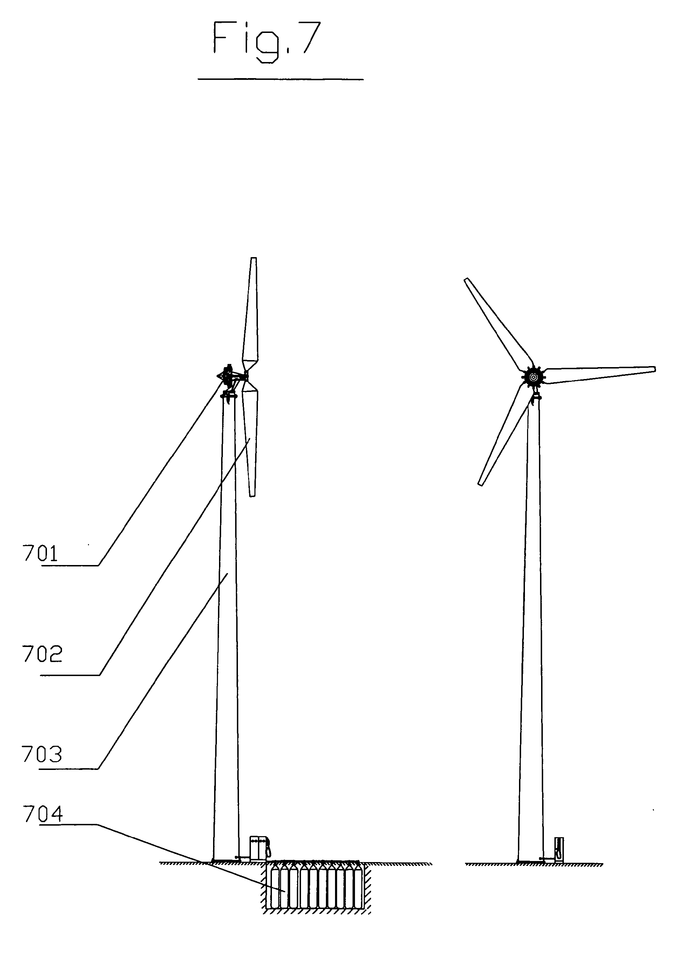

Figure 7 shows general arrangement drawing of the system: compressor(701), turbine (702), tower (703), underground pressure tanks (704); presenting conceptual application.

### Examples of carrying out the invention.

Currently, there exist 1 design version of the system:

### - Technology demonstrator:

Compressor of nominal power 10 kW, turbine oversized for 50 kW (rotor diameter 15 meter, tower 30m) to allow full compression even at wind of 5-6 m/s which are most common at average inland areas. Current casing makes it possible to double compressor output/power by pistons exchange. A downwind-type of turbine was selected for first trials , due to easier directing down-the-wind-axis. However, subsequent versions shall preferably use upwind-turbines for better aerodynamics.

### Technical specifications:

### Compressor:

- rated compressor speed 60 rpm (by wind speed of 6 m/s)
- rated power requirement at 60 rpm: 10 kW
- number of stages: 4 (8 bar, 27 bar, 90 bar, 300 bar abs)
- number of cylinders: 12 per stage , radial arrangement;
- air flow, rated: suction 0.6 Nm3/min, discharge: 2.23 1/min at 300 bar;
- compressor power control: Lower limit: selective blow-off of cylinder groups to follow turbine power curve at low-speed wind conditions. Upper limit: wind turbine passive stall-characteristic at speeds over 100 rpm, pneumatic brake above 150 rpm.
- weight: approx 1000 kg without turbine blades and hub.

### Turbine:

- blade length: 7 m, FRP- blades with 4 optimized profiles;
- diameter: 15 m, downwind;
- tower height: 30 m, steel-sheet tubular conical welded;
- passive stall characteristic above 100 rpm, to be optimized;
- cut-in wind speed, estimated: 2 m/s
- braking action at wind speed approx 25 m/s
- working speed range: 10-150 rpm.

This is to note that compressor power and output grow proportionally to turbine speed and may reach approx. 25 kW or 61/min/300 bar before braking action starts, albeit only in relatively rare strong-wind conditions. The system is however designed to work with fractional power of as little as 1 kW (with 1 group of cylinders working) already by very light breeze of 2 m/s and store energy continuously at 300 bars.

### Envisaged are bigger units:

- 20 kW (the same casing as above), turbine oversized for 50 kW (rotor diameter 15m, height 30m) for low-wind conditions. Storage : 10 x 3001 cylinders ; 300 bar, destined to drive farm tractor via piston-pneumatic engine;
- 100 kW, turbine oversized for 150 kW (rotor diameter 20m, height 36m). Storage: 20 x 3001 cylinders, 300 bars, destined for driving a compressed-air-driven passenger car (via piston pneumatic engine) on everyday-basis ,100 km/day.
- 5 MW compressor with corresponding wind turbine approx. diameter 100 m, which would serve as a ,,filling station,, for feeding a few dozens passenger cars per day. To be built along highways, albeit much more densely than today's petrol stations.

### Susceptibility of industrial application:

The compressor design bases as far as possible on standard industrial components as:
valves, pipes, pipe fittings, pneumatic components, bearings, sealings and use of standard construction material as grey iron, stainless steel , carbon steel, PTFE .The design takes also into regard standard manufacturing methods as casting, milling, grinding, PTFE-coating , as well as facility of assembling and maintenance. The driver turbine is typical power turbine existing on the market.
Being a part of concept for overall energy-storage of wind energy, especially for mobile applications (which is the main factor justifying otherwise inherent heat dissipation) the application possibilities are self-evident.
This is worth to mention that other components of the overall concept do already exist , i.e. compressed-air-driven cars, pneumatically driven fans, pumps, tools, lifts, doors, generators.

### Discussion of risk and impacts:

### -Energy production.

The risks and environmental impacts are all the same as in case of classic wind turbines. for electricity generation, i.e. noise, landscape deformation, bird migrations etc. Otherwise - the cleanest possible source of energy. There is a low-temperature heat production, accompanying air compression, however dissipated at the height of the tower by wind cooling.

### -Storage:

For stationary storage underground (dug-in) cylinders from FRP are considered , which combine low cost with minimal risk in case of rupture/explosion. The multiplication of number by keeping size small (e.g. 300 litres/cylinder) makes for lowering of the impact in case of damage.

The level of compression/storage pressure is basically free. The higher it is , the bigger concentration of energy and bigger material problems/risk aspects. Selected level of 300 bars makes it possible to use existing typical pneumatic components, valves, pipes etc , as well as FRP- tanks for storage, what is particularly important for mobile applications.

In case of mobile application where risks of explosion following road accident must be considered it seems that multiple-pocket FRP-tanks with flow reducers between pockets shall be good solution , giving at least as good safety level as currently used petrol tanks or gas cylinders. Geometry of such pockets adjusted to car body shape may be potentially used as additional external air-bag system.

### Fire hazard obviously is minimal.

### -Stationary applications.

The air-drive is clean, silent, well-known and involves light ,mass-produced components. It may require minimal amounts of oil for lubrication of moving parts (which can be however substituted by Teflon coatings for zero-oil machines).

### -Mobile applications:

There shall be strong effect of cooling down of exhaust air due to decompression. This will require heat-up of the engine , particularly in winter, by introducing minimal combustion (petrol or gas) in one cylinder of pneumatic motor.

Density of energy storage in the air compressed to 300 bars is by factor of 100 lower than density of energy of liquid fuel. This involves tank capacity of approx 1000 litre (the car body structure can be used) and weight of air alone approx. 400 kg, sufficient for some 100 km route. Already acceptable for standard city use, with much room for further inventions. Compressed air driven cars already do exist.

## Claims

1. Reciprocating compressor to compress atmospheric air comprising pressure-casing, cylinders for multi-stage compression, crankshaft, pistons, discharge valves, suction valves, check valves, blow-off valves, control valves, equipped with means for cylinder-group output-control for part-load operation and driven directly by windmill comprising at least means of yaw-control and brake **characterized in that** the said compressor has radial arrangement of all cylinders , aerodynamically - optimized casing to reduce wind resistance and turbulence, output control regulated **in that** the said cylinder-group control is done pneumatically by integral pneumatic distributor actuated from turbine's rotor axial displacement, and said windmill controls: braking action and yawing are done with pneumatic-only devices driven by compressed air from header of said compressor.

2. Device as in claim 1, **characterized in that** said windmill controls for braking action and yawing of the turbine comprise at least device driven by compressed air from header of said compressor where the wind direction is transmitted as pneumatic signal to air motor actuating the yaw mechanism.

3. Device as in claim 1 ,**characterized in that** the said compressor output control comprises at least linear pneumatic distributor for selective blow-off of cylinder groups to follow turbine power curve at low-speed wind conditions, whereas said pneumatic linear distributor uses as input the mechanical displacement of turbine hub downwind or upwind caused by aerodynamic drag forces, output signals being pneumatic, consecutively activating/deactivating separate blow-off valves on each cylinder group.
